# EUROPEAN PATENT APPLICATION

(11) **EP 4 651 615 A1**
(43) Date of publication of application: **19.11.2025**
(21) Application number: 23947140.2
(22) Date of filing: 03.08.2023
(51) Int. Cl.: H04W 74/08

(54) **UPLINK MESSAGE SENDING METHOD AND APPARATUS, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Novagraaf Technologies
(86) International application number: PCT/CN2023/110913
(87) International publication number: WO 2025/025194

(57) **Abstract**

The present application relates to the technical field of communications, and discloses an uplink message sending method and apparatus, a device and a storage medium. The method comprises: sending a first message, wherein an uplink logical channel identifier (LCID) used by the first message is used for indicating a reduced capability user equipment (RedCap UE) or coverage enhancement, and the first message is message 3 in a four-step random access process or message A in a two-step random access process. According to the technical solution provided by the embodiments of the present application, a first message is sent to a network device by means of a UE, an LCID used by the first message is used for indicating a RedCap UE or coverage enhancement, which provides a method for indicating the coverage enhancement or the RedCap UE by means of the LCID used by the first message when an NTN and the RedCap UE are combined, thereby realizing indication of uplink transmission, avoiding repeated indication, and improving transmission efficiency.

## Description

### TECHNICAL FIELD

Embodiments of the present disclosure relate to the technical field of communications, and particularly relate to a method and apparatus for transmitting an uplink message, and a device and a storage medium thereof.

### RELATED ART

In the 3^{rd} Generation Partnership Project (3GPP), a non-terrestrial network (NTN) technology has been introduced into the 5G new radio (NR) system.

The NTN provides communication services for terrestrial users over satellite communications. In a random access procedure to the NTN, an uplink coverage problem arises in a physical uplink control channel (PUCCH) transmission for hybrid automatic repeat request (HARQ) feedback of a message 4 (Msg4), and therefore, a coverage enhancement (i.e., transmission repetition) mechanism is introduced for the Msg4 PUCCH transmission. Because additional transmission resource is consumed to enable coverage enhancement, it is necessary to introduce an uplink indication of a terminal to indicate that the terminal supports or requests the coverage enhancement mechanism, for example, indicate over a Msg3 transmitted by the terminal.

In a case where the terminal is a reduced capability (RedCap) user equipment (UE), it is necessary to identify the RedCap UE over a Msg3. However, in a case where the NTN is combined with the RedCap, the problem that the Msg3 cannot indicate the coverage enhancement and the RedCap UE identification at the same time needs to be addressed.

### SUMMARY

The embodiments of the present disclosure provide a method and apparatus for transmitting an uplink message, and a device and a storage medium thereof. The technical solutions are as follows.

In an aspect, the embodiments of the present disclosure provide a method for transmitting an uplink message. The method is performed by a terminal, and the method includes: transmitting a first message, wherein an uplink logic channel identifier (LCID) used by the first message indicates a RedCap UE or a coverage enhancement, and the first message is a message 3 in a four-step random access procedure or a message A in a two-step random access procedure.

In another aspect, the embodiments of the present disclosure provide a method for receiving an uplink message. The method is performed by a network device, and the method includes: receiving a first message, wherein an uplink LCID used by the first message indicates a RedCap UE or a coverage enhancement, and the first message is a message 3 in a four-step random access procedure or a message A in a two-step random access procedure.

In another aspect, the embodiments of the present disclosure provide an apparatus for transmitting an uplink message. The apparatus is applicable to a terminal, and the apparatus includes: a transmitting module, configured to transmit a first message, wherein an uplink LCID used by the first message indicates a RedCap UE or a coverage enhancement, and the first message is a message 3 in a four-step random access procedure or a message A in a two-step random access procedure.

In another aspect, the embodiments of the present disclosure provide an apparatus for receiving an uplink message. The apparatus is applicable to a network device and the apparatus includes: a receiving module, configured to receive a first message, wherein an uplink LCID used by the first message indicates a RedCap UE or a coverage enhancement, and the first message is a message 3 in a four-step random access procedure or a message A in a two-step random access procedure.

In another aspect, the embodiments of the present disclosure provide a terminal, including: a processor and a transceiver connected to the processor; wherein the transceiver is configured to transmit a first message, wherein an uplink LCID used by the first message indicates a RedCap UE or a coverage enhancement, and the first message is a message 3 in a four-step random access procedure or a message A in a two-step random access procedure.

In another aspect, the embodiments of the present disclosure provide a network device, including: a processor and a transceiver connected to the processor; wherein the transceiver is configured to receive a first message, wherein an uplink LCID used by the first message indicates a RedCap UE or a coverage enhancement, and the first message is a message 3 in a four-step random access procedure or a message A in a two-step random access procedure.

In another aspect, the embodiments of the present disclosure provide a computer-readable storage medium, storing at least one computer program, wherein the at least one computer program, when run by a processor of a terminal, causes the terminal to perform the above method for transmitting an uplink message at the terminal side.

In another aspect, the embodiments of the present disclosure provide a computer-readable storage medium, storing at least one computer program, wherein the at least one computer program, when run by a processor of a network device, causes the network device to perform the above method for receiving an uplink message at the network device side.

In another aspect, the embodiments of the present disclosure provide a chip. The chip includes a programmable logic circuit and/or one or more program instructions. The chip, when running on a terminal, causes the terminal to perform the above method for transmitting an uplink message at the terminal side.

In another aspect, the embodiments of the present disclosure provide a chip. The chip includes a programmable logic circuit and/or one or more program instructions. The chip, when running on a network device, causes the network device to perform the above method for receiving an uplink message at the network device side.

The technical solutions according to the embodiments of the present disclosure achieve at least the following beneficial effects.

The first message is transmitted from the terminal to the network device, and the LCID used by the first message indicates the RedCap UE or the coverage enhancement. A method for indicating the coverage enhancement or the RedCap UE over the LCID used by the first message is provided in a case where the NTN is combined with the RedCap UE, thereby achieving indication of uplink transmission. Repeated indication is avoided and the transmission efficiency is improved.

### BRIEF DESCRIPTION OF DRAWINGS

FIG. 1 is a schematic diagram of a random access procedure according to some embodiments of the present disclosure;
FIG. 2 is a schematic diagram of an NTN communication system according to some embodiments of the present disclosure;
FIG. 3 is a schematic diagram of a communication system according to some embodiments of the present disclosure;
FIG. 4 is a flowchart of a method for transmitting an uplink message according to some embodiments of the present disclosure;
FIG. 5 is a flowchart of a method for transmitting an uplink message according to some embodiments of the present disclosure;
FIG. 6 is a flowchart of a method for transmitting an uplink message according to some embodiments of the present disclosure;
FIG. 7 is a flowchart of a method for receiving an uplink message according to some embodiments of the present disclosure;
FIG. 8 is a block diagram of an apparatus for transmitting an uplink message according to some embodiments of the present disclosure;
FIG. 9 is a block diagram of an apparatus for receiving an uplink message according to some embodiments of the present disclosure; and
FIG. 10 is a structural block diagram of a computer device according to some embodiments of the present disclosure.

### DETAILED DESCRIPTION

For clearer descriptions of the objectives, technical solutions, and advantages of the present disclosure, the embodiments of the present disclosure are further described in detail hereinafter with reference to the accompanying drawings.

First, the terms involved in the embodiments of the present discourse are introduced.

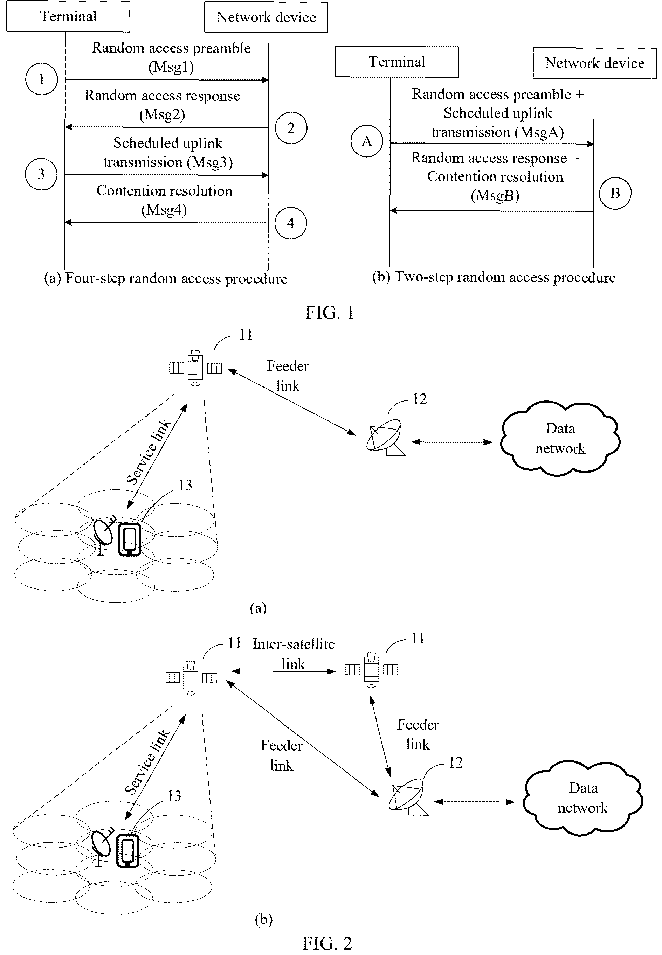

**Random access procedure:** the random access procedure is a procedure of establishing a radio link between a terminal and a network device. After the random access procedure is completed, the network device and the terminal can normally transmit data with each other. In the present disclosure, the random access procedure is a contention-based random access procedure, including a four-step random access procedure and a two-step random access procedure. Referring to FIG. 1, part (a) of FIG. 1 illustrates the four-step random access procedure, and part (b) of FIG. 1 illustrates the two-step random access procedure.

The detailed processes of the four-step random access procedure illustrated in part (a) of FIG. 1 are as follows.

In process 1, the terminal transmits a message 1 (Msg1) to the network device.

The terminal selects a physical random access channel (PRACH) resource and transmits a selected random access (RA) preamble on the selected PRACH.

In process 2, the network device transmits a random access response (RAR) (i.e., transmits a Msg2) to the terminal.

Subsequent to transmitting the Msg1, the terminal starts a RAR window and monitors a physical downlink control channel (PDCCH) scrambled by a random access radio network temporary identifier (RA-RNTI) within the RAR window.

In a case where the terminal receives the PDCCH scrambled by the RA-RNTI and the RAR contains a preamble index transmitted by the terminal itself, the terminal considers that the RAR is successfully received.

In process 3, the terminal transmits a Msg3 over a resource scheduled by the network device.

The Msg3 is mainly used for informing the network device of which event triggers the random access channel (RACH) procedure. For example, in a case of an initial random access procedure, a UE identifier and an establishment cause are carried in the Msg3; and in a case of a radio resource control (RRC) reestablishment, a connected-state UE identifier and an establishment cause are carried in the Msg3.

In process 4, the network device transmits a Msg4 to the terminal.

The Msg4 has two functions, i.e., one is for contention conflict resolution and the other one is for transmission of RRC configuration messages from network device to the terminal. There are two ways for contention conflict resolution. In a first way, in a case where the UE carries a cell radio network temporary identifier (C-RNTI) in the Msg3, the Msg4 is scheduled by the PDCCH scrambled by the C-RNTI. In the other way, in a case where the UE does not carry the C-RNTI in the Msg3, for example, in an initial access, the Msg4 is scheduled by the PDCCH scrambled by a temporary cell radio network temporary identifier (TC-RNTI), and the UE receives a physical downlink shared channel (PDSCH) of the Msg4 and matches common control channel service data units (CCCH SDUs) in the PDSCH to resolve the conflict.

In the four-step random access procedure, two round trips need to be performed between the terminal and the network device, which not only increases the time delay but also generates additional control signaling overheads. To reduce the time delay and control the signaling overheads, the two-step random access procedure illustrated in part (b) of FIG. 1 may be adopted. As illustrated in the figure, the RA preamble (Msg1) and the scheduled PUSCH transmission (Msg3) are combined into a single message (MsgA) from the terminal, and the RAR (Msg2) and the contention resolution (Msg4) are combined into a single message (MsgB) from the network device to the terminal.

NTN: the NTN generally provides communication services for terrestrial users over satellite communications. Compared with ground cellular network communications, the satellite communications have many distinct advantages. First, the satellite communications are not restricted by a user's geographical location. For example, common land communications cannot cover regions where a communication device cannot be set up or communication coverage is not provided due to sparse population, such as oceans, high mountains, and deserts, while for the satellite communications, because one satellite can cover a larger area of land and the satellite can orbit the earth, the satellite communications can theoretically cover the earth. Second, the satellite communications have greater social value. The satellite communications can achieve coverage at lower cost in remote mountain areas and in poor and backward countries and regions, such that people in these regions can benefit from advanced voice communication and mobile internet technologies, which can narrow the gap between these regions and developed countries and promote the development of these regions. Third, the satellite communications provide a longer communication distance, and the communication cost is not significantly increased. Finally, the satellite communications have higher stability and are not restricted by natural disasters.

Communication satellites are categorized into low-earth orbit (LEO) satellites, medium-earth orbit (MEO) satellites, geostationary earth orbit (GEO) satellites, high elliptical orbit satellites, and the like. The current research mainly focuses on the LEO satellite and the GEO satellite.

### 1. LEO

The LEO satellite has an altitude of 500 km to 1500 km, and the corresponding orbit period is about 1.5 hours to 2 hours. The signal propagation latency in a single hop communication between users is generally not less than 20 ms. The maximum satellite visible time is 20 minutes. The signal propagation distance is shorter, the link loss is less, the requirement on a transmit power of a user terminal is not high.

### 2. GEO

The GEO satellite has an orbit altitude of 35786 km, and the orbit period about the earth is 24 hours. The signal propagation latency in a single hop communication between users is generally 250 ms.

FIG. 2 illustrates two NTN communication systems, wherein part (a) of FIG. 2 illustrates an NTN communication system based on transparent forwarding, and part (b) of FIG. 2 illustrates an NTN communication system based on regenerative forwarding.

As illustrated in the figure, to ensure the coverage of the satellite and increase the system capacity of the entire satellite communication system, the satellite uses multiple beams to cover the land, and one satellite can generate dozens of beams or even hundreds of beams to cover the land (i.e., the multiple ellipses illustrated in FIG. 2). One satellite beam can cover a land region with a diameter of dozens of kilometers to hundreds of kilometers. The gateway 12 is used to connect the satellite 11 with the land public network (data network). The feeder link is a link for communication between the gateway 12 and the satellite 11. The service link is a link for communication between the terminal 13 and the satellite 11.

The satellite 11 may also be implemented as an unmanned aircraft system (UAS) platform. In the transparent forwarding mode, the satellite 11 provides functions of radio frequency filtering, and frequency conversion and amplification, that is, the satellite 11 only provides transparent forwarding of a signal but does not change the forwarded wave signal. In the regenerative forwarding mode, in addition to the functions of radio frequency filtering, and frequency conversion and amplification, the satellite 11 further provides functions of demodulation/decoding, routing/switching, and coding/modulation, that is, the satellite 11 has all or part of the functions of a base station. As illustrated in part (b) of FIG. 2, in the regenerative forwarding mode, an inter-satellite link is present between two satellites 11 for communication between the satellites.

**Converge enhancement:** in an NTN, an uplink coverage problem with the PUCCH transmission for HARQ feedback of the Msg4 in the random access procedure arises, and therefore, a transmission repetition mechanism for Msg4 PUCCH transmission was introduced in R18. In terms of the network, because additional transmission resource is consumed to enable the Msg4 PUCCH repetition, this mechanism is only enabled when necessary. Therefore, an uplink indication of a terminal is introduced to indicate that the terminal supports or requests the Msg4 PUCCH repetition mechanism. In the current standard, it is expected to indicate coverage enhancement via a Msg3.

**RedCap UE identification:** a RedCap UE, i.e., a reduced capability terminal, has functional characteristics of a narrower maximum bandwidth, a smaller number of downlink reception branches, a lower modulation order, lower power consumption, and the like in terms of reducing the complexity and cost of a device. In terms of the RedCap UE, a terminal is identified over a Msg3/MsgA from a specific LCID in a random access procedure, and optionally, a terminal is identified over a Msg1/MsgA (a PRACH occasion or a PRACH preamble). By identifying the RedCap UE, the network can perform access control or perform adaptation on transmission for the RedCap UE.

In the NTN, in a case where the indication information about the Msg4 PUCCH repetition is indicated over the Msg3, a reserved LCID is used, that is, the Msg3 is transmitted over a reserved LCID. However, the RedCap UE is also identified over the Msg3 from the specific LCID. Therefore, in a case where the NTN is combined with the RedCap, a problem that one Msg3 cannot indicate the coverage enhancement and the RedCap identification for the Msg4 PUCCH repetition at the same time arises. Therefore, how the terminal transmits the Msg3, i.e., how the terminal selects the LCID used for transmission of the Msg3 is a problem to be addressed.

The communication system and services scenarios described in the embodiments of the present disclosure are intended to describe the technical solutions according to the embodiments of the present disclosure more clearly, but do not constitute limitations on the technical solutions according to the embodiments of the present disclosure. Those of ordinary skill in the art may understand that, with the evolution of the communication system and the emergence of new services scenarios, the technical solutions according to the embodiments of the present disclosure are also applicable to similar technical problems.

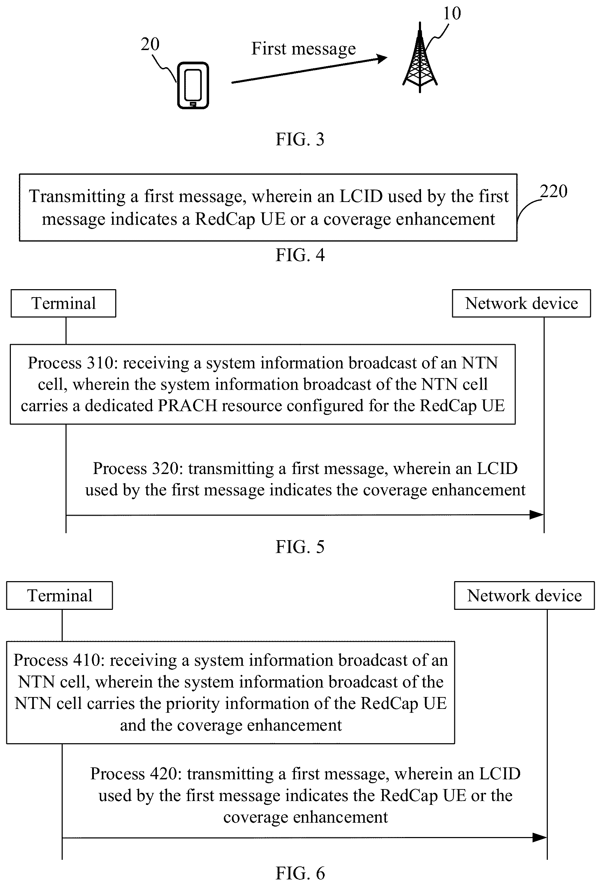

FIG. 3 illustrates a schematic diagram of a communication system according to some embodiments of the present disclosure. The communication system includes a network device 10 and a terminal 20.

The network device 10 is a device that provides wireless communication services for the terminal 20. The network device 10 and the terminal 20 establish a connection using an air interface technology to communicate with each other over the connection, including signaling and data interaction. A plurality of network devices 10 may be deployed, and two neighbor network devices 10 may communicate with each other in a wired or wireless mode. The terminal 20 may switch between different network devices 10, that is, the terminal 20 establishes connections with different network devices 10.

In an example, taking an NTN as an example, the network device 10 in the NTN may be a satellite. One satellite may cover a certain range of land region to provide wireless communication service for the terminals 20 in the land region. Additionally, the satellite orbits the earth, and the communication coverage of different regions on the surface of the earth can be achieved by deploying a plurality of satellites 11.

In another example, taking a cellular communication network as an example, the network device 10 in the cellular communication network may be a base station. The base station is a device that is deployed in an access network to provide a wireless communication function for the terminal 20. The base station includes various forms of macro base stations, micro base stations, relay stations, access points, or the like. In systems employing different radio access technologies, devices with the function of the network device may have different names, for example, gNodeB or gNB in a 5G NR system. As the communication technologies evolve, the name "base station" may change. For the convenience of description, the above devices providing the wireless communication function for the terminal 20 are collectively referred to as the network device in the embodiments of the present disclosure.

Additionally, the terminal 20 involved in the embodiments of the present disclosure includes a handheld device with a wireless communication function, a vehicle-mounted device, a wearable device, a computing device or another processing device connected to a wireless modem, and various forms of UEs, mobile stations (MSs), terminal devices or the like. For the convenience of description, the above devices are collectively referred to as the terminal in the embodiments of the present disclosure.

Additionally, in the embodiments of the present disclosure, the term "network" and "system" are usually used interchangeably, and those skilled in the art may understand their meanings.

Hereinafter, the technical solutions according to the embodiments of the present disclosure are introduced in conjunction with illustrative embodiments.

FIG. 4 illustrates a flowchart of a method for transmitting an uplink message according to some embodiments of the present disclosure. The method is applicable to the communication system as illustrated in FIG. 3 and performed by the terminal 20 in FIG. 3. The method includes the following process.

**In process 220, a first message is transmitted, wherein an LCID used by the first message indicates a RedCap UE or a coverage enhancement.**

The first message is a message 3 (Msg3) in the four-step random access procedure or a message A (MsgA) in the two-step random access procedure. That is, the first message is the Msg3 transmitted from the terminal to the network device in process 3 in part (a) of FIG. 1, or the first message is the MsgA transmitted from the terminal to the network device in process A in part (b) of FIG. 1.

For example, the terminal transmits the first message to the network device, wherein the LCID used by the first message indicates the RedCap UE or the coverage enhancement. That is, whether the first message indicates the coverage enhancement or the RedCap UE is determined based on whether the LCID used for transmission of the first message is an LCID reserved for the coverage enhancement (e.g., PUCCH repetition) or a specific LCID corresponding to the RedCap UE identification.

The LCID used by the first message is determined based on whether the terminal receives a dedicated PRACH resource configured for the RedCap UE, or the LCID used by the first message is determined based on the priority information of the RedCap UE and the coverage enhancement.

In some embodiments, the LCID is determined based on whether a dedicated PRACH resource is configured for the RedCap UE. In a case where the dedicated PRACH resource is configured for the RedCap UE, the LCID is a first LCID, wherein the first LCID indicates the coverage enhancement. In a case where the dedicated PRACH resource is not configured for the RedCap UE, the LCID is a second LCID, wherein the second LCID indicates the RedCap UE.

The PRACH resource is a PRACH occasion or a PRACH preamble.

In some other embodiments, in a case where the dedicated PRACH resource is not configured for the RedCap UE, the LCID is a first LCID or a second LCID as specified in a communication protocol, the first LCID indicates the coverage enhancement, and the second LCID indicates the RedCap UE.

That is, in a case where the dedicated PRACH resource is configured for the RedCap UE, in the four-step random access procedure, because the RedCap UE has already been identified over the dedicated PRACH resource for the RedCap UE during the transmission of the Msg1 (i.e., in process 1), the Msg3 does not need to indicate the RedCap UE identification again, and the Msg3 may be transmitted over the first LCID indicating the coverage enhancement; and in the two-step random access procedure, because the PRACH resource used for transmission of the MsgA has already indicated the RedCap UE identification during the transmission of the MsgA, there is no need to indicate RedCap UE again over the LCID, and the MsgA may be transmitted over the first LCID indicating the coverage enhancement.

In a case where the dedicated PRACH resource is not configured for the RedCap UE, the LCID used for transmission of the Msg3/MsgA is the second LCID indicating the RedCap UE identification. In some embodiments, in this case, the LCID used for transmission of the Msg3/MsgA may also be the first LCID indicating the coverage enhancement. The terminal determines the LCID used by the Msg3/MsgA to be the first LCID or the second LCID based on the communication protocol.

In some embodiments, the terminal receives a system information broadcast of an NTN cell, wherein the system information broadcast of the NTN cell carries the dedicated PRACH resource configured for the RedCap UE. That is, the terminal receives the system information broadcast of the NTN cell, and determines the LCID used by the first message based on whether the system information broadcast includes the dedicated PRACH resource configured for the RedCap UE.

In some other embodiments, the LCID is determined based on the priority information of the RedCap UE and the coverage enhancement. In a case where a priority of the RedCap UE is lower than a priority of the coverage enhancement, the LCID is a first LCID, wherein the first LCID indicates the coverage enhancement. In a case where a priority of the RedCap UE is higher than a priority of the coverage enhancement, the LCID is a second LCID, wherein the second LCID indicates the RedCap UE.

It should be noted that the priority information indicates the priority of the RedCap UE identification and the priority of the coverage enhancement indication, but does not directly indicate the priority of the RedCap UE and the priority of the coverage enhancement (e.g., PDCCH repetition), that is, the priority information is used for comparing the priority of indicating the RedCap UE to the terminal with the priority of indicating the coverage enhancement to the terminal over the LCID during the transmission of the first message.

In some embodiments, in a case where the terminal acquires the priority information of the RedCap UE and the coverage enhancement, the terminal determines the LCID based on the priority information. For example, the terminal receives the system information broadcast of the NTN cell, wherein the system information broadcast of the NTN cell carries the priority information of the RedCap UE and the coverage enhancement, and the terminal determines the LCID based on the priority information. For another example, the terminal acquires the priority information of the RedCap UE and the coverage enhancement based on the communication protocol, and determines the LCID based on the priority information.

In some embodiments, the priority information of the RedCap UE and the coverage enhancement is determined based on a system information broadcast or specified in a communication protocol.

In some embodiments, the coverage enhancement includes at least one of PUCCH repetition for HARQ feedback of a second message, PDSCH repetition of a second message, or PDCCH repetition, wherein the second message is a message 4 (Msg4) in the four-step random access procedure or a message B (MsgB) in the two-step random access procedure.

In summary, in the technical solution according to the embodiments of the present disclosure, the first message is transmitted from the terminal to the network device, wherein the LCID used by the first message indicates the RedCap UE or the coverage enhancement. A method for indicating the coverage enhancement or the RedCap UE over the LCID used for transmission of the Msg3 in the four-step random access procedure or used for transmission of the MsgA in the two-step random access procedure is provided in a case where the NTN is combined with the RedCap UE. Thus, indication of uplink transmission is achieved. In a case where the RedCap UE identification has already been achieved, the LCID used by the first message is used for indicating the coverage enhancement, thereby avoiding repeated indication and saving the transmission resources. In addition, whether the LCID used by the first message is used for indicating the coverage enhancement or the RedCap UE is determined based on the different priorities, thereby improving the transmission efficiency.

The following embodiments illustrated in FIG. 5 and FIG. 6 show a procedure of determining the LCID based on whether a dedicated PRACH resource is configured for the RedCap UE and a procedure of determining the LCID based on the priority information of the RedCap UE and the coverage enhancement, respectively.

### Determining the LCID based on the dedicated PRACH resource configured for the RedCap UE:

FIG. 5 illustrates a flowchart of a method for transmitting an uplink message according to some embodiments of the present disclosure. The method is applicable to the communication system illustrated in FIG. 3, and the method includes the following processes.

**In process 310, a system information broadcast of an NTN cell is received, wherein the system information broadcast of the NTN cell carries a dedicated PRACH resource configured for the RedCap UE.**

The terminal receives the system information broadcast of the NTN cell, wherein the system information broadcast of the NTN cell carries the dedicated PRACH resource configured for the RedCap UE. For example, the system information broadcast of the NTN cell carries a PRACH occasion or a PRACH preamble configured for the RedCap UE.

The PRACH resource is a dedicated resource configured for the RedCap UE, that is, the RedCap UE may be identified based on the information transmitted over the dedicated PRACH resource.

That is, in the four-step random access procedure, the Msg1 is transmitted over the dedicated PRACH resource, the RedCap UE identification has already been achieved based on the dedicated PRACH resource, and there is no need to indicate the RedCap UE identification in the Msg3 subsequently.

That is, in the two-step random access procedure, the MsgA is transmitted over the dedicated PRACH resource, the RedCap UE identification has already been achieved based on the dedicated PRACH resource, and there is no need to additionally indicate the RedCap UE identification in the MsgA.

**In process 320, a first message is transmitted, wherein an LCID used by the first** message **indicates the coverage enhancement.**

In a case where the system information broadcast of the NTN cell carries the dedicated PRACH resource configured for the RedCap UE, there is no need to indicate the RedCap UE identification, and the terminal transmits the first message to the network device. The LCID used by the first message indicates the coverage enhancement. That is, in a case where the dedicated PRACH resource is configured for the RedCap UE, the LCID is a first LCID, wherein the first LCID indicates the coverage enhancement. That is, the first message transmitted from the terminal to the network device uses the LCID used for the coverage enhancement during transmission.

The first message is a message 3 (Msg3) in the four-step random access procedure or a message A (MsgA) in the two-step random access procedure.

The coverage enhancement includes at least one of PUCCH repetition for HARQ feedback of a second message, PDSCH repetition of a second message, or PDCCH repetition, wherein the second message is a message 4 (Msg4) in the four-step random access procedure or a message B (MsgB) in the two-step random access procedure.

In some other embodiments, in a case where the system information broadcast of the NTN cell received by the terminal in the process 310 does not carry the dedicated PRACH resource configured for the RedCap UE, the LCID is a second LCID, wherein the second LCID indicates the RedCap UE. In some embodiments, the LCID is a first LCID or a second LCID as specified in the communication protocol, wherein the first LCID indicates the coverage enhancement, and the second LCID indicates the RedCap UE. That is, whether the LCID used for transmission of the first message is the first LCID indicating the coverage enhancement or the second LCID indicating the RedCap UE is determined based on the communication protocol.

In some embodiments, the process 310 may be implemented as an independent embodiment, for example, as a method for receiving a system information broadcast, and the process 320 may be implemented as an independent embodiment, for example, as a method for transmitting an uplink message, which are not limited in the present disclosure.

In summary, in the technical solution according to the embodiments of the present disclosure, after the terminal receives the system information broadcast carrying the dedicated PRACH resource configured for the RedCap UE, the terminal transmits the first message to the network device, wherein the LCID used by the first message indicates the RedCap UE or the coverage enhancement. A method of indicating the coverage enhancement or the RedCap UE over the LCID used for transmission of the Msg3 in the four-step random access procedure or used for transmission of the MsgA in the two-step random access procedure is provided in a case where the NTN is combined with the RedCap UE. Thus, the indication of uplink transmission is achieved.

According to this method, in a case where the dedicated PRACH resource is configured for the RedCap UE, the RedCap UE can be identified over the PRACH resource used by the Msg1/MsgA, and the first message does not need to indicate the RedCap UE again. In this case, the LCID used by the first message is used for indicating the coverage enhancement, thereby avoiding repeated indication and saving the transmission resources. The transmission efficiency is improved by indicating the coverage enhancement.

### Determining the LCID based on the priority information of the RedCap UE and the coverage enhancement:

FIG. 6 illustrates a flowchart of a method for transmitting an uplink message according to some embodiments of the present disclosure. The method is applicable to the communication system illustrated in FIG. 3, and the method includes the following processes.

**In process 410, a system information broadcast of an NTN cell is received, wherein the system information broadcast of the NTN cell carries the priority information of the RedCap UE and the coverage enhancement.**

The terminal receives the system information broadcast of the NTN cell, wherien the system information broadcast of the NTN cell carries the priority information of the RedCap UE and the coverage enhancement.

The priority information indicates the priority of the RedCap UE identification and the priority of the coverage enhancement indication, but not directly indicate the priority of the RedCap UE and the priority of the coverage enhancement. That is, the priority information is used for comparing the priority of indicating the RedCap UE and the priority of performing coverage enhancement over the LCID during the transmission of the first message.

For example, the priority information is an indication of the priority of the RedCap UE identification being higher than the priority of the coverage enhancement, that is, the LCID used for transmission of the first message indicates the RedCap UE. For another example, the priority information is an indication of the priority of the RedCap UE identification being lower than the priority of the coverage enhancement indication, that is, the LCID used for transmission of the first message indicates the coverage enhancement.

In some other embodiments, the priority information is specified in a communication protocol. Alternatively, in a case where the priority information carried in the system information broadcast of the NTN cell is that the priority of the RedCap UE identification is the same as the priority of the coverage enhancement indication, the priority is determined based on the communication protocol.

The coverage enhancement includes at least one of PUCCH repetition for HARQ feedback of a second message, PDSCH repetition of a second message, or PDCCH repetition, wherein the second message is a message 4 (Msg4) in the four-step random access procedure or a message B (MsgB) in the two-step random access procedure.

**In process 420, a first message is transmitted, wherein an LCID used by the first message indicates the RedCap UE or the coverage enhancement.**

The first message is a message 3 (Msg3) in the four-step random access procedure or a message A (MsgA) in the two-step random access procedure.

The terminal transmits the first message, wherein the LCID used by the first message indicates the RedCap UE or the coverage enhancement. The LCID is determined based on the priority information of the RedCap UE and the coverage enhancement.

In some embodiments, in a case where the priority of the RedCap UE is lower than the priority of the coverage enhancement, the LCID is a first LCID, wherein the first LCID indicates the coverage enhancement. That is, the first message, during transmission, uses a dedicated LCID for the coverage enhancement, for example, a dedicated LCID for Msg4 PUCCH repetition.

In some other embodiments, in a case where the priority of the RedCap UE is higher than the priority of the coverage enhancement, the LCID is a second LCID, wherein the second LCID indicates the RedCap UE. That is, the first message, during transmission, uses a dedicated LCID for the RedCap UE.

In some embodiments, in a case where the priority information of the RedCap UE and the coverage enhancement is acquired, the process of determining the LCID based on the priority information is performed. That is, the process 420 is performed only in the case where the priority information in the process 420 is acquired.

In some embodiments, the process 410 may be implemented as an independent embodiment, for example, as a method for receiving a system information broadcast, and the process 420 may be implemented as an independent embodiment, for example, as a method for transmitting an uplink message, which are not limited in the present disclosure.

In summary, in the technical solution according to the embodiments of the present disclosure, after the terminal receives the system information broadcast carrying the priority information, the terminal transmits the first message to the network device, wherein the LCID used by the first message indicates the RedCap UE or the coverage enhancement. A method for indicating the coverage enhancement or the RedCap UE over the LCID used for transmission of the Msg3 in the four-step random access procedure or used for transmission of the MsgA in the two-step random access procedure is provided in a case where the NTN is combined with the RedCap UE. Thus, the indication of uplink transmission is achieved.

According to this method, whether the LCID used by the first message indicates the RedCap UE or the coverage enhancement is determined based on the priority information acquired by the terminal, and uplink transmission is indicated based on the priorities, thereby improving the transmission efficiency.

It should be noted that the embodiments illustrated in FIG. 5 and FIG. 6 may be implemented as independent embodiments respectively, for example, as an embodiment of determining the LCID based on the dedicated PRACH resource configured for the RedCap UE or an embodiment of determining the LCID based on the priority information of the RedCap UE and the coverage enhancement. Alternatively, the embodiments illustrated in FIG. 5 and FIG. 6 may be combined into one embodiment, for example, as an embodiment of preferentially transmitting the first message over the first LCID based on the dedicated PRACH resource configured for the RedCap UE in a case where the system information broadcast of the NTN cell received by the terminal includes both the dedicated PRACH resource configured for the RedCap UE and the priority information, or as an embodiment of determining the LCID used by the first message based on the priority information in a case where the system information broadcast of the NTN cell received by the terminal does not include the dedicated PRACH resource configured for the RedCap UE.

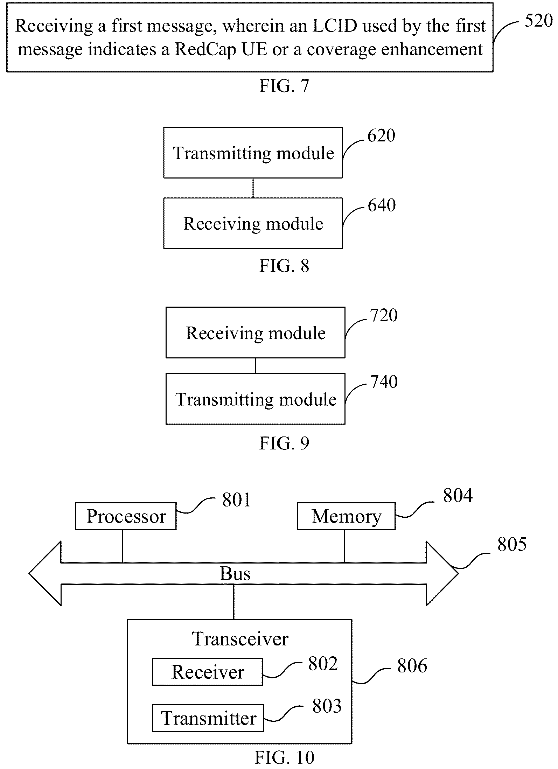

FIG. 7 illustrates a flowchart of a method for receiving an uplink message according to some embodiments of the present disclosure. The method is applicable to the communication system illustrated in FIG. 3, and the method is performed by the network device 10 illustrated in FIG. 3. The method includes the following process.

**In process 520, a first message is received, wherein an LCID used by the first message indicates a RedCap UE or a coverage enhancement.**

The first message is a message 3 (Msg3) in the four-step random access procedure or a message A (MsgA) in the two-step random access procedure. That is, the first message is the Msg3 transmitted from the terminal to the network device in process 3 in part (a) of FIG. 1, or the first message is the MsgA transmitted from the terminal to the network device in process A in part (b) of FIG. 1.

For example, the network device receives the first message from the terminal, wherein the LCID used by the first message indicates the RedCap UE or a coverage enhancement. That is, whether the first message indicates the coverage enhancement or the RedCap UE is determined based on whether the LCID used for transmission of the first message is an LCID reserved for the coverage enhancement (e.g., PUCCH repetition) or a specific LCID corresponding to the RedCap UE.

The LCID used by the first message is determined based on whether the terminal receives a dedicated PRACH resource configured for the RedCap UE, or the LCID used by the first message is determined based on the priority information of the RedCap UE and the coverage enhancement.

In some embodiments, the LCID is determined by the terminal based on whether a dedicated PRACH resource is configured for the RedCap UE. In a case where the dedicated PRACH resource is configured for the RedCap UE, the LCID is a first LCID, wherein the first LCID indicates the coverage enhancement. In a case where the dedicated PRACH resource is not configured for the RedCap UE, the LCID is a second LCID, wherein the second LCID indicates the RedCap UE.

The PRACH resource is a PRACH occasion or a PRACH preamble.

In some embodiments, in a case where the dedicated PRACH resource is not configured for the RedCap UE, the LCID is a first LCID or a second LCID as specified in a communication protocol, wherein the first LCID indicates the coverage enhancement, and the second LCID indicates the RedCap UE.

That is, in a case where the dedicated PRACH resource is configured for the RedCap UE, in the four-step random access procedure, because the RedCap UE has already been identified over the dedicated PRACH resource for the RedCap UE during the transmission of the Msg1 (i.e., in process 1), the Msg3 does not need to indicate the RedCap UE identification again, and the Msg3 may be transmitted over the first LCID indicating the coverage enhancement; and in the two-step random access procedure, because the PRACH resource used for transmission of the MsgA has already indicated the RedCap UE identification during the transmission of the MsgA, there is no need to indicate RedCap UE again over the LCID, and the MsgA may be transmitted over the first LCID indicating the coverage enhancement.

In a where the dedicated PRACH resource is not configured for the RedCap UE, the LCID used for transmission of the Msg3/MsgA is the second LCID indicating the RedCap UE identification. In some embodiments, in this case, the LCID used for transmission of the Msg3/MsgA may also be the first LCID indicating the coverage enhancement. The terminal determines the LCID used by the Msg3/MsgA to be the first LCID or the second LCID based on the communication protocol.

In some embodiments, the network device transmits a system information broadcast of an NTN cell, wherein the system information broadcast of the NTN cell carries the dedicated PRACH resource configured for the RedCap UE. Subsequent to receiving the system information broadcast of the NTN cell, the terminal determines, based on the dedicated PRACH resource configured for the RedCap UE included in the system information broadcast, that the LCID used by the first message indicates the coverage enhancement.

In some other embodiments, the LCID is determined by the terminal based on the priority information of the RedCap UE and the coverage enhancement. In a case where the priority of the RedCap UE is lower than the priority of the coverage enhancement, the LCID is a first LCID, wherein the first LCID indicates the coverage enhancement. In a case where the priority of the RedCap UE is higher than the priority of the coverage enhancement, the LCID is a second LCID, wherein the second LCID indicates the RedCap UE.

It should be noted that the priority information indicates the priority of the RedCap UE identification and the priority of the coverage enhancement indication, but does not directly indicate the priority of the RedCap UE and the priority of the coverage enhancement (e.g., PDCCH repetition), that is, the priority information is used for comparing the priority of indicating the RedCap UE to the terminal with the priority of performing coverage enhancement over the LCID during transmission of the first message.

In some embodiments, the network device transmits the priority information of the RedCap UE and the coverage enhancement over the system information broadcast of the NTN cell or RRC dedicated signaling. In response to acquiring the priority information of the RedCap UE and the coverage enhancement, the terminal determines the LCID based on the priority information.

In some embodiments, the coverage enhancement includes at least one of PUCCH repetition for HARQ feedback of a second message, PDSCH repetition of a second message, or PDCCH repetition, wherein the second message is a message 4 (Msg4) in the four-step random access procedure or a message B (MsgB) in the two-step random access procedure.

It should be noted that transmitting, by the network device, the system information broadcast of the NTN cell which carries the dedicated PRACH resource configured for the RedCap UE may be implemented as an independent embodiment of implementing the method for indicating an uplink message, and the transmitting, by the network device, the priority information of the RedCap UE and the coverage enhancement over the system information broadcast of the NTN cell or RRC dedicated signaling may also be implemented as an independent embodiment of implementing the method for indicating an uplink message, which are not limited in the present disclosure.

In summary, in the technical solution according to the embodiments of the present disclosure, the network device receives the first message from the terminal, wherein the LCID used by the first message indicates the RedCap UE or the coverage enhancement. A method for indicating the coverage enhancement or the RedCap UE over the LCID used for transmission of the Msg3 in the four-step random access procedure or used for transmission of the MsgA in the two-step random access procedure is provided in a case where the NTN is combined with the RedCap UE. Thus, the indication of uplink transmission is achieved. In a case where the RedCap UE identification has already been achieved, the LCID used by the first message is used for indicating the coverage enhancement, thereby avoiding repeated indication and saving the transmission resources. In addition, whether the LCID used by the first message is used for indicating the coverage enhancement or the RedCap UE is determined based on the different priorities, thereby improving the transmission efficiency.

FIG. 8 illustrates a block diagram of an apparatus for transmitting an uplink message according to some embodiments of the present disclosure. The apparatus has the functions of implementing the above method embodiments performed by the terminal. The functions may be implemented by hardware or implemented by corresponding software executed by hardware. The apparatus may be the terminal described above or arranged in the terminal. As illustrated in FIG. 8, the apparatus includes a transmitting module 620, wherein the transmitting module 620 may be implemented as the transmitter in the communication device illustrated in FIG. 10.

**In some embodiments, the transmitting module 620 is configured to transmit a first message, wherein an LCID used by the first message indicates a RedCap UE or a coverage enhancement.**

The first message is a message 3 (Msg3) in a four-step random access procedure or a message A (MsgA) in a two-step random access procedure. That is, the first message is the Msg3 transmitted from the terminal to the network device in process 3 in part (a) of FIG. 1, or the first message is the MsgA transmitted from the terminal to the network device in process A in part (b) of FIG. 1.

For example, the transmitting module 620 transmits the first message, wherein the LCID used by the first message indicates a RedCap UE or a coverage enhancement. That is, whether the first message indicates the coverage enhancement or the RedCap UE is determined based on whether the LCID used by the first message is an LCID reserved for the coverage enhancement (e.g., PUCCH repetition) or a specific LCID corresponding to the RedCap UE.

The LCID used by the first message is determined based on whether the above apparatus for transmitting the uplink message receives a dedicated PRACH resource configured for the RedCap UE, or the LCID used by the first message is determined based on the priority information of the RedCap UE and the coverage enhancement.

In some embodiments, the LCID is determined based on whether a dedicated PRACH resource is configured for the RedCap UE. In a case where the dedicated PRACH resource is configured for the RedCap UE, the LCID is a first LCID, wherein the first LCID indicates the coverage enhancement. In a case where the dedicated PRACH resource is not configured for the RedCap UE, the LCID is a second LCID, wherein the second LCID indicates the RedCap UE.

The PRACH resource is a PRACH occasion or a PRACH preamble.

In some other embodiments, in a case where the dedicated PRACH resource is not configured for the RedCap UE, the LCID is a first LCID or a second LCID as specified in a communication protocol, wherein the first LCID indicates the coverage enhancement, and the second LCID indicates the RedCap UE.

That is, in a case where the dedicated PRACH resource is configured for the RedCap UE, in the four-step random access procedure, because the RedCap UE has already been identified over the dedicated PRACH resource for the RedCap UE during the transmission of the Msg1 (i.e., in process 1), the Msg3 does not need to indicate the RedCap UE identification again, and the Msg3 may be transmitted over the first LCID indicating the coverage enhancement; and in the two-step random access procedure, because the PRACH resource used for transmission of the MsgA has already indicated the RedCap UE identification during the transmission of the MsgA, there is no need to indicate RedCap UE over the LCID again, and the MsgA may be transmitted over the first LCID indicating the coverage enhancement. However, in a case where the dedicated PRACH resource is not configured for the RedCap UE, the LCID used for transmission of the Msg3/MsgA is the first LCID indicating the coverage enhancement or the second LCID indicating the RedCap UE identification. The apparatus for transmitting the uplink message determines the LCID used by the Msg3/MsgA to be the first LCID or the second LCID based on the communication protocol.

In some embodiments, the apparatus for transmitting the uplink message receives a system information broadcast of an NTN cell, wherein the system information broadcast of the NTN cell carries the dedicated PRACH resource configured for the RedCap UE. That is, the apparatus for transmitting the uplink message receives the system information broadcast of the NTN cell, and determines the LCID used by the first message based on whether the system information broadcast includes the dedicated PRACH resource configured for the RedCap UE.

In some other embodiments, the LCID is determined based on the priority information of the RedCap UE and the coverage enhancement. In a case where the priority of the RedCap UE is lower than the priority of the coverage enhancement, the LCID is a first LCID, wherein the first LCID indicates the coverage enhancement. In a case where the priority of the RedCap UE is higher than the priority of the coverage enhancement, the LCID is a second LCID, wherein the second LCID indicates the RedCap UE.

It should be noted that the priority information indicates the priority of the RedCap UE identification and the priority of the coverage enhancement indication, but does not directly indicate the priority of the RedCap UE and the priority of the coverage enhancement (e.g., PDCCH repetition), that is, the priority information is used for comparing the priority of indicating the RedCap UE with the priority of performing coverage enhancement over the LCID during the transmission of the first message.

In some embodiments, in a case where the apparatus for transmitting the uplink message acquires the priority information of the RedCap UE and the coverage enhancement, the apparatus for transmitting the uplink message determines the LCID based on the priority information. For example, the apparatus for transmitting the uplink message receives the system information broadcast of the NTN cell, wherein the system information broadcast of the NTN cell carries the priority information of the RedCap UE and the coverage enhancement, and the apparatus for transmitting the uplink message determines the LCID based on the priority information. For another example, the apparatus for transmitting the uplink message acquires the priority information of the RedCap UE and the coverage enhancement based on the communication protocol, and determines the LCID based on the priority information.

In some embodiments, the priority information of the RedCap UE and the coverage enhancement is determined based on a system information broadcast or specified in a communication protocol.

In some embodiments, the coverage enhancement includes at least one of PUCCH repetition for HARQ feedback of a second message, PDSCH repetition of a second message, or PDCCH repetition, wherein the second message is a message 4 (Msg4) in the four-step random access procedure or a message B (MsgB) in the two-step random access procedure.

**In some other embodiments, the apparatus further includes a receiving module 640 configured to receive a system information broadcast of an NTN cell, wherein the system information broadcast of the NTN cell carries a dedicated PRACH resource configured for the RedCap UE.**

The receiving module 640 receives the system information broadcast of the NTN cell, wherein the system information broadcast of the NTN cell carries the dedicated PRACH resource configured for the RedCap UE. For example, the system information broadcast of the NTN cell carries a PRACH occasion or a PRACH preamble configured for the RedCap UE.

The PRACH resource is a dedicated resource configured for the RedCap UE, that is, the RedCap UE can be identified based on information transmitted over the dedicated PRACH resource.

That is, in the four-step random access procedure, the Msg1 is transmitted over the dedicated PRACH resource, the RedCap UE identification has already been achieved based on the dedicated PRACH resource, and there is no need to indicate the RedCap UE identification in the Msg3 subsequently.

That is, in the two-step random access procedure, the MsgA is transmitted over the dedicated PRACH resource, the RedCap UE identification has already been achieved based on the dedicated PRACH resource, and there is no need to additionally indicate the RedCap UE identification in the MsgA.

**The transmitting module 620 is configured to transmit a first message, wherein an LCID used by the first message indicates the coverage enhancement.**

In a case where the system information broadcast of the NTN cell carries the dedicated PRACH resource configured for the RedCap UE, there is no need to indicate the RedCap UE identification, and the apparatus for transmitting the uplink message transmits the first message to the apparatus for receiving the uplink message, wherein the LCID used by the first message indicates the coverage enhancement. That is, in a case where the dedicated PRACH resource is configured for the RedCap UE, the LCID is a first LCID, wherein the first LCID indicates the coverage enhancement. That is, the first message transmitted from the apparatus for transmitting the uplink message to the apparatus for receiving the uplink message uses the LCID for the coverage enhancement during transmission.

The first message is a message 3 (Msg3) in the four-step random access procedure or a message A (MsgA) in the two-step random access procedure.

The coverage enhancement includes at least one of PUCCH repetition for HARQ feedback of a second message, PDSCH repetition of a second message, or PDCCH repetition, wherein the second message is a message 4 (Msg4) in the four-step random access procedure or a message B (MsgB) in the two-step random access procedure.

In some other embodiments, in a case where the system information broadcast of the NTN cell received by the apparatus for transmitting the uplink message does not carry the dedicated PRACH resource configured for the RedCap UE, the LCID is a second LCID, wherein the second LCID indicates the RedCap UE. In some embodiments, the LCID is a first LCID or a second LCID as specified in the communication protocol, wherein the first LCID indicates the coverage enhancement, and the second LCID indicates the RedCap UE. That is, whether the LCID used for transmission of the first message is the first LCID indicating the coverage enhancement or the second LCID indicating the RedCap UE is determined based on the communication protocol.

In some embodiments, the receiving module 640 may be implemented as an independent embodiment, for example, as an apparatus for receiving a system information broadcast, and the transmitting module 620 may be implemented as an independent embodiment, for example, as an apparatus for transmitting an uplink message, which are not limited in the present disclosure.

**In some other embodiments, the receiving module 640 receives a system information broadcast of an NTN cell, wherein the system information broadcast of the NTN cell carries the priority information of the RedCap UE and the coverage enhancement.**

The receiving module 640 receives the system information broadcast of the NTN cell, wherein the system information broadcast of the NTN cell carries the priority information of the RedCap UE and the coverage enhancement.

The priority information indicates the priority of RedCap UE identification and the priority of the coverage enhancement indication, but does not directly indicate the priority of the RedCap UE and the priority of the coverage enhancement (e.g., PDCCH repetition). That is, the priority information is used for comparing the priority of indicating the RedCap UE and the priority of performing the coverage enhancement over the LCID during transmission of the first message.

For example, the priority information is that the priority of the RedCap UE identification is higher than the priority of the coverage enhancement indication, that is, the LCID used for transmission of the first message indicates the RedCap UE. For another example, the priority information is that the priority of the RedCap UE identification is lower than the priority of the coverage enhancement indication, that is, the LCID used for transmission of the first message indicates the coverage enhancement.

In some other embodiments, the priority information is specified in a communication protocol. Alternatively, in a case where the priority information carried in the system information broadcast of the NTN cell is that the priority of the RedCap UE identification is the same as the priority of the coverage enhancement indication, the priority is determined based on the communication protocol.

The coverage enhancement includes at least one of PUCCH repetition for HARQ feedback of a second message, PDSCH repetition of a second message, or PDCCH repetition, wherein the second message is a message 4 (Msg4) in the four-step random access procedure or a message B (MsgB) in the two-step random access procedure.

**The transmitting module 620 is configured to transmit the first message, wherein the LCID used by the first message indicates the RedCap UE or the coverage enhancement.**

The first message is a message 3 (Msg3) in the four-step random access procedure or a message A (MsgA) in the two-step random access procedure.

The transmitting module 620 transmits the first message, wherein the LCID used by the first message indicates the RedCap UE or the coverage enhancement. The LCID is determined based on the priority information of the RedCap UE and the coverage enhancement.

In some embodiments, in a case where the priority of the RedCap UE is lower than the priority of the coverage enhancement, the LCID is a first LCID, wherein the first LCID indicates the coverage enhancement. That is, the first message, during transmission, uses a dedicated LCID for the coverage enhancement, for example, a dedicated LCID for the Msg4 PUCCH repetition.

In some other embodiments, in a case where the priority of the RedCap UE is higher than the priority of the coverage enhancement, the LCID is a second LCID, wherein the second LCID indicates the RedCap UE. That is, the first message, during transmission, uses a dedicated LCID for the RedCap UE.

In some embodiments, in a case where the priority information of the RedCap UE and the coverage enhancement is acquired, the process of determining the LCID based on the priority information is performed.

In some embodiments, the receiving module 640 may be implemented as an independent embodiment, for example, as an apparatus for receiving a system information broadcast, and the transmitting module 620 may be implemented as an independent embodiment, for example, as an apparatus for transmitting an uplink message, which are not limited in the present disclosure.

FIG. 9 illustrates a block diagram of an apparatus for transmitting an uplink message according to some embodiments of the present disclosure. The apparatus has the functions of implementing the above method embodiments performed by the network device. The functions may be implemented by hardware or implemented by corresponding software executed by hardware. The apparatus may be the network device described above or arranged in the network device. As illustrated in FIG. 9, the apparatus includes a receiving module 720, wherein the receiving module 720 may be implemented as the receiver in the communication device illustrated in FIG. 10.

**The receiving module 720 is configured to receive a first message in process 520, wherein an LCID used by the first message indicates a RedCap UE or a coverage enhancement.**

The first message is a message 3 (Msg3) in the four-step random access procedure or a message A (MsgA) in the two-step random access procedure. That is, the first message is the Msg3 transmitted from the terminal to the network device in process 3 in part (a) of FIG. 1, or the first message is the MsgA transmitted from the terminal to the network device in process A in part (b) of FIG. 1.

For example, the receiving module 720 receives the first message from the apparatus for transmitting the uplink message, wherein the LCID used by the first message indicates the RedCap UE or a coverage enhancement. That is, whether the first message indicates the coverage enhancement or the RedCap UE is determined based on whether the LCID used for transmission of the first message is an LCID reserved for the coverage enhancement (e.g., PUCCH repetition) or a specific LCID corresponding to the RedCap UE.

The LCID used by the first message is determined based on whether the apparatus for transmitting the uplink message receives a dedicated PRACH resource configured for the RedCap UE, or the LCID used by the first message is determined based on the priority information of the RedCap UE and the coverage enhancement.

In some embodiments, the LCID is determined by the apparatus for transmitting the uplink message based on whether a dedicated PRACH resource is configured for the RedCap UE. In a case where the dedicated PRACH resource is configured for the RedCap UE, the LCID is a first LCID, wherein the first LCID indicates the coverage enhancement. In a case where the dedicated PRACH resource is not configured for the RedCap UE, the LCID is a second LCID, wherein the second LCID indicates the RedCap UE.

The PRACH resource is a PRACH occasion or a PRACH preamble.

In some embodiments, in a case where the dedicated PRACH resource is not configured for the RedCap UE, the LCID is a first LCID or a second LCID as specified in a communication protocol, wherein the first LCID indicates the coverage enhancement, and the second LCID indicates the RedCap UE.

That is, in a case where the dedicated PRACH resource is configured for the RedCap UE, in the four-step random access procedure, because the RedCap UE has already been identified over the dedicated PRACH resource for the RedCap UE during the transmission of the Msg1 (i.e., in process 1), the Msg3 does not need to indicate the RedCap UE identification again, and the Msg3 may be transmitted over the first LCID indicating the coverage enhancement; and in the two-step random access procedure, because the PRACH resource used for transmission of the MsgA has already indicated the RedCap UE identification during the transmission of the MsgA, there is no need to indicate RedCap UE over the LCID again, and the MsgA may be transmitted over the first LCID indicating the coverage enhancement.

In a case where the dedicated PRACH resource is not configured for the RedCap UE, the LCID used for transmission of the Msg3/MsgA is the second LCID indicating the RedCap UE identification. In some embodiments, in this case, the LCID used for transmission of the Msg3/MsgA may also be the first LCID indicating the coverage enhancement. The apparatus for transmitting the uplink message determines the LCID used by the Msg3/MsgA to be the first LCID or the second LCID based on the communication protocol.

In some other embodiments, the LCID is determined by the apparatus for transmitting the uplink message based on the priority information of the RedCap UE and the coverage enhancement. In a case where the priority of the RedCap UE is lower than the priority of the coverage enhancement, the LCID is a first LCID, wherein the first LCID indicates the coverage enhancement. In a case where the priority of the RedCap UE is higher than the priority of the coverage enhancement, the LCID is a second LCID, wherein the second LCID indicates the RedCap UE.

It should be noted that the priority information indicates the priority of the RedCap UE identification and the priority of the coverage enhancement indication, but does not directly indicate the priority of the RedCap UE and the priority of the coverage enhancement (e.g., PDCCH repetition), that is, the priority information is used for comparing the priority of indicating the RedCap UE with the priority of performing coverage enhancement over the LCID during transmission of the first message.

In some embodiments, the coverage enhancement includes at least one of PUCCH repetition for HARQ feedback of a second message, PDSCH repetition of a second message, or PDCCH repetition, wherein the second message is a message 4 (Msg4) in the four-step random access procedure or a message B (MsgB) in the two-step random access procedure.

**In some embodiments, the apparatus further includes a transmitting module 740.**

The transmitting module 740 is used by the apparatus for receiving the uplink message to transmit a system information broadcast of an NTN cell, wherein the system information broadcast of the NTN cell carries the dedicated PRACH resource configured for the RedCap UE. Subsequent to receiving the system information broadcast of the NTN cell, the apparatus for transmitting the uplink message determines, based on the dedicated PRACH resource configured for the RedCap UE included in the system information broadcast, that the LCID used by the first message indicates the coverage enhancement.

The transmitting module 740 is used by the apparatus for receiving the uplink message to transmit the priority information of the RedCap UE and the coverage enhancement over the system information broadcast of the NTN cell or RRC dedicated signaling. In response to acquiring the priority information of the RedCap UE and the coverage enhancement, the apparatus for transmitting the uplink message determines the LCID based on the priority information.

In some embodiments, the transmitting module 740 may be implemented as an independent apparatus, for example, as an apparatus for transmitting priority information; and the receiving module 720 may be implemented as an independent apparatus, for example, as an apparatus for receiving an uplink message, which are not limited in the present disclosure.

It should be noted that in a case where the apparatus according to the above embodiments implements its functions, the division of the functional modules is only for illustrative purposes. In practice, the functions may be distributed to different functional modules based on actual needs, that is, the internal structure of the apparatus may be divided into different functional modules to complete all or part of the functions described above.

Regarding the apparatus in the above embodiments, the specific way in which each module performs operations has been described in detail in the relevant method embodiments, and details are not elaborated herein any further.

FIG. 10 illustrates a schematic structural diagram of a communication device (a terminal or a network device) according to some embodiments of the present disclosure. The communication device includes a processor 801, a receiver 802, a transmitter 803, a memory 804, and a bus 805.

The processor 801 includes one or more processing cores, and achieves various functional applications and information processing by running software programs and modules. In some embodiments, the processor 801 is configured to determine the LCID after the receiving module 640 receives the system information broadcast of the NTN cell.

The receiver 802 and the transmitter 803 may be implemented as a transceiver 806. The transceiver 806 may be a communication chip. The receiver 802 is configured to perform the functions and processes of above receiving module 640 and receiving module 720, and the transmitter 803 is configured to perform the functions and processes of above transmitting module 620 and transmitting module 740.

The memory 804 is connected to the processor 801 over the bus 805. The memory 804 is configured to store at least one computer program, and the processor 801 is configured to run the at least one computer program to perform various processes performed by the terminal or network device in the above method embodiments.

In addition, the memory 804 may be implemented by any type of volatile or non-volatile storage device or combinations thereof. The volatile or non-volatile storage device includes but is not limited to a random-access memory (RAM), a read-only memory (ROM), an erasable programmable read-only memory (EPROM), an electrically erasable programmable read-only memory (EEPROM), a flash memory or another solid-state memory technology, a compact disc read-only memory (CD-ROM), a digital video disc (DVD), another optical disk, a tap cartridge, a tape, a disk memory or another magnetic storage device.

In a case where the communication device is implemented as a terminal, the processor and transceiver involved in the embodiments of the present disclosure may perform the processes performed by the terminal in the method as illustrated in any one of FIG. 4 to FIG. 6, which is not elaborated herein any further.

In some embodiments, in a case where the communication device is implemented as a terminal, the transmitter 803 is configured to transmit a first message, wherein an uplink LCID used by the first message indicates a RedCap UE or a coverage enhancement, and the first message is a message 3 in a four-step random access procedure or a message A in a two-step random access procedure.

In a case where the communication device is implemented as a network device, the processor and transceiver involved in the embodiments of the present disclosure may perform the processes performed by the network device in the method as illustrated in FIG. 7, which is not elaborated herein any further.

In some embodiments, in a case where the communication device is implemented as a network device, the receiver 802 is configured to receive a first message, wherein an uplink LCID used by the first message indicates a RedCap UE or a coverage enhancement, and the first message is a message 3 in a four-step random access procedure or a message A in a two-step random access procedure.

Some embodiments of the present disclosure further provide a computer-readable storage medium storing at least one computer program, wherein the at least one computer program, when run by a processor of a terminal or a processor of a network device, causes the processor to perform the method for transmitting an uplink message or the method for receiving an uplink message described above.

In some embodiments, the computer-readable storage medium includes a ROM, a RAM, a solid state drive, an optical disk or the like. The RAM may include a resistance random access memory (ReRAM) and a dynamic random access memory (DRAM).

Some embodiments of the present disclosure further provide a chip. The chip includes a programmable logic circuit and/or one or more program instructions. The chip, when running on a terminal or a network device, causes the terminal or the network device to perform the method for transmitting an uplink message or the method for receiving an uplink message described above.

Some embodiments of the present disclosure further provide a computer program product or a computer program, wherein the computer program product or the computer program includes at least one computer instruction. The at least one computer instruction is stored in a computer-readable storage medium, wherein the at least one computer instruction, when read from the computer-readable storage medium and run by a processor of a terminal or a processor of a network device, causes the terminal or the network device to perform the method for transmitting an uplink message or the method for receiving an uplink message described above.

A person skilled in the art shall appreciate that in the foregoing one or more examples, the functions described in the embodiments of the present disclosure may be implemented by hardware, software, firmware, or any combination thereof. The functions, when implemented by software, may be stored in a computer-readable medium or transmitted as one or more instructions or codes on the computer-readable medium. The computer-readable medium includes a computer storage medium and a communication medium. The communication medium includes any medium that facilitates transfer of a computer program from one place to another. The storage medium may be any available medium accessible by a general-purpose computer or a special-purpose computer.

Described above are example embodiments of the present disclosure, but not intended to limit the present disclosure. Any modifications, equivalent replacements, improvements and the like made within the spirit and principles of the present disclosure should be encompassed within the scope of protection of the present disclosure.

## Claims

1. A method for transmitting an uplink message, performed by a terminal, the method comprising:
transmitting a first message, wherein an uplink logic channel identifier (LCID) used by the first message indicates a reduced capability (RedCap) user equipment (UE) or a coverage enhancement, and the first message is a message 3 in a four-step random access procedure or a message A in a two-step random access procedure.

2. The method according to claim 1, wherein the LCID is determined based on whether a dedicated physical random access channel (PRACH) resource is configured for the RedCap UE.

3. The method according to claim 2, wherein in a case where the dedicated PRACH resource is configured for the RedCap UE, the LCID is a first LCID, wherein the first LCID indicates the coverage enhancement.

4. The method according to claim 2, wherein in a case where the dedicated PRACH resource is not configured for the RedCap UE, the LCID is a second LCID, wherein the second LCID indicates the RedCap UE.

5. The method according to any one of claims 2 to 4, further comprising:
receiving a system information broadcast of a non-terrestrial network (NTN) cell, wherein the system information broadcast of the NTN cell carries the dedicated PRACH resource configured for the RedCap UE.

6. The method according to claim 1, wherein the LCID is determined based on priority information of the RedCap UE and the coverage enhancement.

7. The method according to claim 6, wherein in a case where a priority of the RedCap UE is lower than a priority of the coverage enhancement, the LCID is a first LCID, wherein the first LCID indicates the coverage enhancement.

8. The method according to claim 6, wherein in a case where a priority of the RedCap UE is higher than a priority of the coverage enhancement, the LCID is a second LCID, wherein the second LCID indicates the RedCap UE.

9. The method according to claim 6, further comprising:
determining the LCID based on the priority information in response to acquiring the priority information of the RedCap UE and the coverage enhancement.

10. The method according to claim 6, wherein the priority information is determined based on a system information broadcast or specified in a communication protocol.

11. The method according to any one of claims 6 to 9, further comprising:
receiving a system information broadcast of a non-terrestrial network (NTN) cell, wherein the system information broadcast of the NTN cell carries the priority information of the RedCap UE and the coverage enhancement.

12. The method according to any one of claims 1 to 11, wherein the coverage enhancement comprises at least one of:
physical uplink control channel (PUCCH) repetition for hybrid automatic repeat request (HARQ) feedback of a second message;
physical downlink shared channel (PDSCH) repetition of a second message; or
physical downlink control channel (PDCCH) repetition;
wherein the second message is a message 4 in the four-step random access procedure or a message B in the two-step random access procedure.

13. A method for receiving an uplink message, performed by a network device, the method comprising:
receiving a first message, wherein an uplink logic channel identifier (LCID) used by the first message indicates a reduced capability (RedCap) user equipment (UE) or a coverage enhancement, and the first message is a message 3 in a four-step random access procedure or a message A in a two-step random access procedure.

14. The method according to claim 13, wherein the LCID is determined by a terminal based on whether a dedicated physical random access channel (PRACH) resource is configured for the RedCap UE.

15. The method according to claim 14, wherein in a case where the dedicated PRACH resource is configured for the RedCap UE, the LCID is a first LCID, wherein the first LCID indicates the coverage enhancement.

16. The method according to claim 14, wherein in a case where the dedicated PRACH resource is not configured for the RedCap UE, the LCID is a second LCID, wherein the second LCID indicates the RedCap UE.

17. The method according to any one of claims 14 to 16, further comprising:
transmitting a system information broadcast of a non-terrestrial network (NTN) cell, wherein the system information broadcast of the NTN cell carries the dedicated PRACH resource configured for the RedCap UE.

18. The method according to claim 13, wherein the LCID is determined by a terminal based on priority information of the RedCap UE and the coverage enhancement.

19. The method according to claim 18, wherein in a case where a priority of the RedCap UE is lower than a priority of the coverage enhancement, the LCID is a first LCID, wherein the first LCID indicates the coverage enhancement.

20. The method according to claim 18, wherein in a case where a priority of the RedCap UE is higher than a priority of the coverage enhancement, the LCID is a second LCID, wherein the second LCID indicates the RedCap UE.

21. The method according to claim 18, further comprising:
transmitting the priority information of the RedCap UE and the coverage enhancement over a system information broadcast of a non-terrestrial network (NTN) cell or radio resource control (RRC) dedicated signaling.

22. The method according to any one of claims 13 to 21, wherein the coverage enhancement comprises at least one of:
physical uplink control channel (PUCCH) repetition for hybrid automatic repeat request (HARQ) feedback of a second message;
physical downlink shared channel (PDSCH) repetition of a second message; or
physical downlink control channel (PDCCH) repetition;
wherein the second message is a message 4 in the four-step random access procedure or a message B in the two-step random access procedure.

23. An apparatus for transmitting an uplink message, applicable to a terminal, the apparatus comprising:
a transmitting module, configured to transmit a first message, wherein an uplink logic channel identifier (LCID) used by the first message indicates a reduced capability (RedCap) user equipment (UE) or a coverage enhancement, and the first message is a message 3 in a four-step random access procedure or a message A in a two-step random access procedure.

24. An apparatus for receiving an uplink message, applicable to a network device, the apparatus comprising:
a receiving module, configured to receive a first message, wherein an uplink logic channel identifier (LCID) used by the first message indicates a reduced capability (RedCap) user equipment (UE) or a coverage enhancement, and the first message is a message 3 in a four-step random access procedure or a message A in a two-step random access procedure.

25. A terminal, comprising: a processor and a transceiver connected to the processor;
wherein the transceiver is configured to transmit a first message, wherein an uplink logic channel identifier (LCID) used by the first message indicates a reduced capability (RedCap) user equipment (UE) or a coverage enhancement, and the first message is a message 3 in a four-step random access procedure or a message A in a two-step random access procedure.

26. A network device, comprising: a processor and a transceiver connected to the processor;
wherein the transceiver is configured to receive a first message, wherein an uplink logic channel identifier (LCID) used by the first message indicates a reduced capability (RedCap) user equipment (UE) or a coverage enhancement, and the first message is a message 3 in a four-step random access procedure or a message A in a two-step random access procedure.

27. A computer-readable storage medium, storing at least one computer program, wherein the at least one computer program, when run by a processor, causes the processor to perform the method for transmitting an uplink message as defined in any one of claims 1 to 12, or causes a computer device to perform the method for receiving an uplink message as defined in any one of claims 13 to 22.

28. A chip, comprising: a circuit structure, wherein the chip is configured to run in a computer device to cause the computer device perform the method for transmitting an uplink message as defined in any one of claims 1 to 12 or the method for receiving an uplink message as defined in any one of claims 13 to 22.

29. A computer program product, comprising: at least one computer instruction stored in a computer-readable storage medium, wherein the at least one computer instruction, when read from the computer-readable storage medium and run by a processor of a computer device, causes the computer device to perform the method for transmitting an uplink message as defined in any one of claims 1 to 12 or the method for receiving an uplink message as defined in any one of claims 13 to 22.

30. A computer program, wherein the computer program, when run by a processor of a computer device, causes the computer device to perform the method for transmitting an uplink message as defined in any one of claims 1 to 12 or the method for receiving an uplink message as defined in any one of claims 13 to 22.
